# EUROPÄISCHE PATENTSCHRIFT

(11) **EP 2 933 006 B1**
(45) Veröffentlichungstag und Bekanntmachung des Hinweises auf die Patenterteilung: **14.06.2017**
(21) Anmeldenummer: 15162608.2
(22) Anmeldetag: 07.04.2015
(51) Int. Cl.: C02F 1/00, C02F 1/02, E03C 1/10, B01D 35/04, C02F 1/28, E03C 1/044, F24D 17/00

(54) **WASSERAUSLAUFARMATUR MIT FILTER, ANSCHLUSSSTÜCK ZUM ANSCHLIESSEN AN EINE WASSERAUSLAUFARMATUR UND VERFAHREN ZUM BETRIEB EINER WASSERAUSLAUFARMATUR**
WATER DRAIN FITTING WITH FILTER, CONNECTING PIECE FOR CONNECTION TO A WATER DRAIN FITTING AND METHOD FOR OPERATING A WATER DRAINAGE FIXTURE
ROBINETTERIE DE SORTIE D'EAU DOTÉE DE FILTRE, PIÈCE DE RACCORDEMENT À UNE ROBINETTERIE DE SORTIE D'EAU ET PROCÉDÉ DE FONCTIONNEMENT D'UNE ROBINETTERIE DE SORTIE D'EAU

(30) Priorität: 17.04.2014 DE 102014105532
(43) Veröffentlichungstag der Anmeldung: 21.10.2015
(73) Patentinhaber: Grünbeck Wasseraufbereitung GmbH, 89420 Höchstäd a.d. Donau (DE)
(72) Erfinder: Söcknick, Ralf, Dr., 70806 Kornwestheim (DE)
(74) Vertreter: Charrier Rapp & Liebau

(56) Entgegenhaltungen:
- EP-A2- 0 539 069
- WO-A1-2010/060142
- CN-A- 102 777 680
- CN-U- 202 100 823
- DE-U1- 20 301 999
- US-A1- 2010 006 508
- WEGMANN ET AL: "Modification of ceramic microfilters with colloidal zirconia to promote the adsorption of viruses from water", WATER RESEARCH, ELSEVIER, AMSTERDAM, NL, Bd. 42, Nr. 6-7, 25. Oktober 2007 (2007-10-25), Seiten 1726-1734, XP022523717, ISSN: 0043-1354

## Beschreibung

Die Erfindung betrifft eine Wasserauslaufarmatur, insbesondere einen Wasserhahn oder einen Duschkopf, nach dem Oberbegriff des Anspruchs 1, ein Anschlussstück zum Anschließen an eine Wasserauslaufarmatur nach dem Oberbegriff des Anspruchs 13 sowie ein Verfahren zum Betrieb einer Wasserauslaufarmatur nach dem Oberbegriff des Anspruchs 14.

Aus der EP 0 539 069 A2 ist ein Wasserhahn mit einem integrierten Filter bekannt. Der Filter dient dazu, Mikroorganismen zurück zu halten, die in dem Wasser enthalten sind, welches durch den Wasserhahn geleitet wird. Insbesondere in Wasserleitungen, in denen Wasser längere Zeit stagnieren kann, besteht die Gefahr, dass sich in dem stagnierenden Wasser Mikroorganismen, wie z.B. Legionellen, vermehren, die das Wasser verunreinigen. Dieses Problem wird mit dem bekannten Wasserhahn mit integriertem Filter gelöst, indem die im Wasser enthaltenen Mikroorganismen in dem Filter von dem Filter zurück gehalten werden. Der Filter weist dabei ein mikroporöses Filtermaterial mit Porengrößen von höchstens 0,22 µm auf, welches die Mikroorganismen nicht passieren können. Problematisch dabei ist, dass sich die Poren des mikroporösen Filtermaterials bei längerem Gebrauch des Filters zusetzen und das Filtermaterial dadurch gesättigt wird und nicht mehr für einen weiteren Durchlass von Wasser verfügbar ist. Darüber hinaus können in dem mit Mikroorganismen beladenen Filtermaterial weitere Mikroorganismen entstehen, wodurch die Sättigung des Filtermaterials noch beschleunigt wird. Der Filter oder das mikroporöse Filtermaterial muss deshalb in regelmäßigen Abständen ausgetauscht werden. Dies ist umständlich und zeitaufwendig und verursacht hohe Kosten für neue Filter.

Aufgrund der sehr kleinen Porendurchmesser des mikroporösen Filtermaterials weist der verwendete Filter des bekannten Wasserhahns darüber hinaus einen hohen Strömungswiderstand auf, der zu einer Reduzierung der Strömungsgeschwindigkeit des aus dem Wasserhahn auslaufenden Wassers führt. Der Strömungswiderstand wird dabei noch weiter erhöht, wenn das Filtermaterial mit Mikroorganismen beladen ist, welche die feinen Poren des mikroporösen Filtermaterials verstopfen.

Bei dem bekannten Wasserhahn ist der Filter in der rohrförmigen Leitung mit einigem Abstand zur Auslauföffnung angeordnet. Es können daher von außen Mikroorganismen in die Leitung eindringen und sich dort vermehren. Dies kann bspw. durch verunreinigtes Spritzwasser geschehen, das von außen durch die Auslauföffnung in die Leitung des Wasserhahns eindringt. Auch durch Kontakt der Ränder der Auslauföffnung mit verunreinigten Gegenständen, wie z.B. mit Mikroorganismen behaftete Hände, können Mikroorganismen von außen in die Leitung des Wasserhahns gelangen, wo es dann zu einem ungehinderten Anwachsen der Mikroorganismen und in der Folge zu einer Verunreinigung des aus der Auslauföffnung strömenden Wassers kommen kann.

Hiervon ausgehend liegt der Erfindung die Aufgabe zugrunde, die bekannte Wasserauslaufarmatur mit integriertem Filter so zu verbessern, dass die Wechselzyklen für den Austausch des Filters bzw. des Filtermaterials möglichst ohne Wartungsaufwand verlängert werden können und die Kontamination der Wasserauslaufarmatur durch von außen eintretende Mikroorganismen verhindert wird. Weiterhin soll der durch den Filter hervorgerufene Strömungswiderstand möglichst gering gehalten werden und der Filter soll zu einer möglichst zuverlässigen und weitgehend vollständigen Desinfektion des aus der Wasserauslaufarmatur entnommenen Wassers führen. Insbesondere soll dabei auch eine retrograde Verkeimung durch von außen in die Wasserauslaufarmatur eindringende Mikroorganismen unterbunden werden.

Diese und weitere Aufgaben werden mit der Wasserauslaufarmatur gemäß Anspruch 1 und mit einem Anschlussstück zum Anschließen an eine Wasserauslaufarmatur gemäß Anspruch 13 gelöst. Die Aufgaben werden auch durch das Verfahren des Anspruchs 14 gelöst.

Die erfindungsgemäße Wasserauslaufarmatur umfasst wenigstens eine Leitung, welche zumindest im wesentlichen rohrförmig ausgebildet ist und eine Auslauföffnung aufweist, durch die das der Wasserauslaufarmatur unter Druck zugeführte Wasser ausströmen kann. In der erfindungsgemäßen Wasserauslaufarmatur ist in oder an der Auslauföffnung ein Filter angeordnet, der geeignet ist, Mikroorganismen zu binden, insbesondere durch Sorption oder Adhäsion. Durch die Anordnung des Filters in oder an der Auslauföffnung wird verhindert, dass Mikroorganismen von außen durch die Auslauföffnung in die Leitung der Wasserauslaufarmatur eintreten und sich dort vermehren können. Hierfür ist der Filter möglichst nahe an der Auslauföffnung der Wasserauslaufarmatur angeordnet, bevorzugt direkt in der Mündung der Auslauföffnung. Gleichzeitig filtert der Filter auch das durch die Wasserauslaufarmatur ausströmende Wasser, wobei in dem Wasser enthaltene Mikroorganismen im Filter gebunden werden.

Zur Desinfektion des Filters ist dieser mit einer Heizeinrichtung zum Erhitzen des Filters gekoppelt. Mit dieser Heizeinrichtung können die im Filtermaterial angesammelten Mikroorganismen regelmäßig und bevorzugt zyklisch in vorgegebenen Desinfektionszyklen thermisch abgetötet werden, indem der Filter bzw. das Filtermaterial des Filters zumindest kurzzeitig auf Temperaturen von wenigstens 70°C erhitzt wird. Das regelmäßige Abtöten der im Filtermaterial gebundenen Mikroorganismen verhindert, dass in dem Filtermaterial durch natürliches Wachstum weitere Mikroorganismen entstehen. Dadurch wird eine Sättigung des Filtermaterials mit Mikroorganismen zuverlässig verhindert, wodurch auch eine Erhöhung des Strömungswiderstands des Filters vermieden werden kann.

Die Heizeinrichtung umfasst zweckmäßig eine durch oder um das Filtermaterial des Filters geführte Heizwendel, welche zum Erhitzen mit elektrischem Strom beaufschlagt wird. Mit der Heizeinrichtung kann das Filtermaterial des Filters unmittelbar (d.h. ohne Erhitzung von Wasser, das durch das Filtermaterial strömt) und in regelmäßigen Abständen, bevorzugt periodisch, auf Temperaturen von wenigstens 70°C erhitzt werden. Bei solchen Temperaturen werden die im Filter gebundenen Mikroorganismen zuverlässig abgetötet. Die unmittelbare Erhitzung des Filtermaterials durch die Heizeinrichtung ist dabei energiesparend, da nur das Filtermaterial des Filters auf Temperaturen von wenigstens 70°C erhitzt wird, um die darin angesammelten Mikroorganismen thermisch abzutöten, ohne dass eine Menge von Wasser, welche durch das Filtermaterial strömt, durch die Heizeinrichtung auf solche Temperaturen erhitzt werden müsste, was erheblich mehr Energie für den Betrieb der Heizeinrichtung benötigen würde.

Die Verwendung einer Heizeinrichtung zum Abtöten der in dem Filter gesammelten Mikroorganismen weist im Vergleich zu einer Chemikalienzufuhr, über welche dem Filter ein Desinfektionsmittel zuführbar ist, den Vorteil auf, dass sie weitgehend wartungsfrei ist und vollautomatisiert betrieben werden kann und dass kein Desinfektionsmittel nachgefüllt werden muss.

Zur Energieversorgung der Heizeinrichtung ist diese mit einer Energieversorgungseinrichtung gekoppelt. In einem bevorzugten Ausführungsbeispiel umfasst die Energieversorgungseinrichtung dabei einen elektrischen Generator, der in der Leitung der Wasserauslaufarmatur angeordnet ist und die Bewegungsenergie des durch die Leitung strömenden Wassers in elektrische Energie umwandelt und diese der Einrichtung zum Abtöten der im Wasserfilter gebundenen Mikroorganismen zuführt. Bei der Energieversorgungseinrichtung kann es sich jedoch auch um einen Anschluss an die öffentliche Stromversorgung bzw. ein damit verbundenes Netzgerät oder einen Akkumulator bzw. eine Batterie handeln.

Die Heizeinrichtung ist zur Steuerung der thermischen Desinfizierung des Filters zweckmäßig mit einer Steuereinrichtung gekoppelt. Diese startet den Betrieb der Heizeinrichtung regelmäßig und zweckmäßig periodisch in vorgegebenen Desinfektionszyklen, um die im Filter angesammelten Mikroorganismen abzutöten. Bevorzugt ist die Steuereinrichtung so programmiert, dass sie die Heizeinrichtung zum Abtöten der im Filter gebundenen Mikroorganismen periodisch in kurzen Desinfektionszyklen startet. Die Dauer und der Abstand der aufeinanderfolgenden Desinfektionszyklen sind dabei zweckmäßig über die Steuereinrichtung einstellbar.

Die in den vorgegebenen Desinfektionszyklen abgetöteten Mikroorganismen werden beim Betrieb der Wasserauslaufarmatur durch das durch den Filter strömende Wasser ausgetragen, wodurch in dem Filtermaterial des Filters wieder freie Plätze zur Anlagerung von (lebenden) Mikroorganismen geschaffen werden. Auf diese Weise wird der Filter dauerhaft in einem aufnahmefähigen Zustand gehalten. Dadurch wird eine Erhöhung des Strömungswiderstands des Filters durch Verblocken des Filters mit abgetöteten Mikroorganismen verhindert.

Der Filter ist zweckmäßig mit einer automatisierten Einrichtung zum Austragen der in dem Filter gesammelten Mikroorganismen gekoppelt. Die Einrichtung zum Austragen der in dem Filter gesammelten Mikroorganismen kann dabei beispielsweise durch eine Spüleinrichtung gebildet sein, mit der eine Spülflüssigkeit in den Filter eingeleitet wird, welche den Filter bevorzugt mit hoher Strömungsgeschwindigkeit durchströmt und dabei die in dem Filter angesammelten (und abgetöteten) Mikroorganismen aus dem Filter ausspült. Hierfür enthält die Spüleinrichtung zum Austragen der in dem Filter gesammelten Mikroorganismen eine Zufuhrleitung zum Zuführen der Spülflüssigkeit und eine Ablaufleitung, durch welche die eingeleitete Spülflüssigkeit wieder aus dem Filter abfließen kann.

Der Filter kann entweder in einer möglichst nahe der Auslauföffnung angeordneten Filteraufnahme in der Leitung der Wasserauslaufarmatur oder in einem Anschlussstück zum Anschließen an die Wasserauslaufarmatur angeordnet sein. Wenn der Filter austauschbar in einer in der Leitung angeordneten Filteraufnahme eingesetzt ist, ist es zweckmäßig, wenn diese Filteraufnahme mit einem abnehmbaren oder verschwenkbaren Deckel verschlossen ist. Der Filter kann dann bei geöffnetem Deckel aus der Filteraufnahme entnommen und durch einen Austauschfilter oder ein neues Filtermaterial ersetzt werden.

Die Anordnung des Filters in einem Anschlussstück, welches (stromabwärts) im Bereich der Auslauföffnung der Wasserauslaufarmatur an diese anschließbar ist, ermöglicht die Nachrüstung bereits bestehender Wasserauslaufarmaturen mit einer erfindungsgemäßen Filtereinrichtung. Das Anschlussstück zum Anschließen an die Wasserauslaufarmatur umfasst dabei ein Gehäuse mit einem Anschlusselement zur Befestigung des Anschlussstücks an die Wasserauslaufarmatur, wobei in dem Gehäuse ein Durchflusskanal verläuft, der in eine Auslauföffnung des Anschlussstücks mündet. Der Filter ist in dem Durchflusskanal des Anschlussstücks angeordnet, um die Mikroorganismen aus dem Wasser herauszulösen und zu binden, welches durch den Durchflusskanal strömt. Erfindungsgemäß ist dabei der Filter zum thermischen Abtöten der im Filter gebundenen Mikroorganismen mit einer Heizeinrichtung gekoppelt. Auch bei dieser Ausführungsform der Erfindung ist der im Durchflusskanal des Anschlussstück befindliche Filter nahe der Auslauföffnung der mit einem entsprechenden Anschlussstück ausgestatteten Wasserauslaufarmatur angeordnet, wodurch eine Rückverkeimung (retrograde Verkeimung) durch das Eindringen, von Mikroorganismen von außen durch die Auslauföffnung in die Leitung der Wasserauslaufarmatur verhindert werden kann. Ein erfindungsgemäßes Anschlussstück kann z.B. an Stelle eines Strahlreglers an einem Wasserhahn befestigt werden. Zweckmäßig enthält das Anschlussstück dann im Bereich seiner Auslauföffnung einen integrierten Strahlregler.

Der bevorzugt in der erfindungsgemäßen Wasserauslaufarmatur bzw. dem erfindungsgemäßen Anschlussstück verwendete Filter umfasst eine Mehrzahl von zumindest im Wesentlichen parallel zueinander und in einer Längsrichtung des Filters verlaufende Kanäle, die jeweils einen Kanaleingang und einen Kanalausgang aufweisen und zumindest teilweise von einem elektroaktiven Material begrenzt werden. Im Betrieb des Filters wird das zu filtrierende Wasser durch die Kanäle geleitet, so dass das Wasser die Kanäle jeweils vom Kanaleingang zum Kanalsausgang durchströmt, ohne das elektroaktive Material zu durchströmen. Dabei werden im Wasser enthaltene Mikroorganismen, insbesondere Viren und Bakterien, wie z.B. Salmonellen und Legionellen, und ggf. deren Nährstoffe durch Elektroadsorption am elektroaktiven Filtermaterial angelagert und so aus dem Wasser entfernt. Das Wasser strömt dabei durch die Kanäle des Filters, ohne das die Kanäle begrenzende Material zu durchströmen. Dadurch wird ein äußerst geringer Strömungswiderstand erzeugt, weil das zu filtrierende Wasser weitgehend ungehindert in Längsrichtung durch die Kanäle strömen kann und nicht durch ein ggf. bereits mit abgeschiedenen Partikeln verstopftes Filtermaterial strömen muss.

Die Anlagerung der Mikroorganismen am elektroaktiven Material erfolgt dabei durch Elektroadsorption, welche aufgrund der elektroaktiven Eigenschaften des elektroaktiven Materials, insbesondere dessen elektrokinetischem Potenzial (Zeta-Potenzial) ermöglicht wird. Hierfür enthält das elektroaktive Material, welches die Kanäle des Filters zumindest teilweise begrenzt, Substanzen mit einem elektrokinetischen Potenzial in wässriger Umgebung. Beispielsweise enthält das elektroaktive Material ein Metalloxid, insbesondere Aluminiumoxid und/oder Aluminiumhydroxid (Al(OH)₃) und/oder Böhmit (eine Modifikation von Aluminiumhydroxid mit der chemischen Zusammensetzung AlO(OH)) und/oder Zirkonoxid. Es ist bekannt, dass diese Materialien in wässriger Umgebung, und insbesondere im pH-Bereich von 3 - 8, ein elektrokinetisches Potenzial besitzen und dadurch in der Lage sind, negativ geladene Teilchen und Partikel durch Elektroadsorption zu binden. Dadurch können die aufgrund ihrer Zellwandstruktur in der Regel negativ geladenen Mikroorganismen im Wasser an dem elektroaktiven Material des in der erfindungsgemäßen Wasserauslaufarmatur eingesetzten Filters adsorbiert werden. Es hat sich in überraschender Weise gezeigt, dass es zur Elektroadsorption von Mikroorganismen ausreicht, das mit Mikroorganismen belastete Wasser durch die Kanäle des Filters zu leiten, ohne dass das Wasser die Kanalwandungen durchströmt. Dadurch erzeugt der Filter nur einen sehr kleinen Strömungswiderstand.

Als besonders zweckmäßig hat es sich erwiesen, das elektroaktive Material als elektropositiven Textil-Verbundstoff auszubilden, der insbesondere ein Gemisch von Mikro- oder Nanoteilchen oder Fasern eines Metalloxids, wie z.B. Aluminiumoxid oder Aluminiumhydroxid oder Böhmit, sowie ein faseriges Trägermaterial, beispielsweise aus Polymer-, Carbon- oder Glasfasern, enthält oder vollständig aus einem solchen Gemisch besteht. Besonders zweckmäßig ist dabei ein Gemisch aus Aluminiumoxid- oder Aluminiumhydroxid- oder Böhmit-Fasern mit einem Faserdurchmesser im Bereich von wenigen Nanometern bis zu 10 µm und einem faserigen Trägermaterial, bspw. ein Faservlies aus Carbon- oder Glasfasern. Als besonders geeignet haben sich dabei aluminiumhaltige Fasern mit einem Durchmesser im Nanometerbereich und insbesondere im Bereich von 2 bis 100 nm und einem Verhältnis von Länge zu Durchmesser von mehr als 5 erwiesen.

In einer bevorzugten Ausführungsform des Filters ist dieser als Wickelfilter ausgebildet und wird durch Wickeln eines flächigen Papier- oder Textilmaterials hergestellt. Dabei wird zweckmäßig das flächige Papier- oder Textilmaterial zu einem Zylinder mit offenen Stirnseiten gewickelt. Die offenen Stirnseiten des Zylinders bilden dabei die Kanaleingänge bzw. die Kanalausgänge der Kanäle des Filters. Um eine hohe effektive Filterfläche zu erzeugen, ist es zweckmäßig, wenn die Kanäle der zylindrisch ausgebildete Wickelfilter eine Zylinderlänge L aufweisen, welche größer ist als der Kanaldurchmesser d, wobei das Verhältnis von Zylinderlänge L zu Kanaldurchmesser d wenigstens 10 und bevorzugt mehr als 100 beträgt. Typische Werte für die Länge L der Kanäle liegen zwischen 5 mm und 50 mm und der Kanaldurchmesser d liegt beispielsweise im Bereich von 0,1 mm bis 5 mm.

Der Filter setzt sich bevorzugt aus aufgewickelten und dadurch übereinander liegenden Lagen eines flächigen und elektroaktiven Papier- oder Textilmaterials zusammen, welche durch Abstandshalter voneinander getrennt sind. Zwischen benachbarten Lagen des Wickelfilters sind die Abstandshalter angeordnet und erstrecken sich dabei in Längsrichtung des Filters. Dadurch werden zwischen benachbarten Lagen des Wickelfilters und den Abstandshaltern Kanäle ausgebildet, die sich in Längsrichtung des Filters erstrecken und zumindest im Wesentlichen parallel zueinander verlaufen. Bei den Abstandshaltern kann es sich um längliche, beispielsweise stabförmige Abstandshalter handeln, die in Längsrichtung des Filters angeordnet sind. Bevorzugt weisen die Abstandshalter eine wellenförmige oder eine zick-zack-förmige Struktur auf, ähnlich der Struktur einer Wellpappe. Besonders zweckmäßig ist es, die Abstandshalter ebenso wie die Lagen des Wickelfilters aus einem elektroaktiven Material zu fertigen. Dadurch wird gewährleistet, dass die Kanäle des Filters allseitig von Kanalwänden begrenzt werden, die durch ein in wässriger Umgebung elektroaktives Material (d.h. durch ein Material mit einem elektrokinetischen Zeta-Potenzial), begrenzt werden. Auf diese Weise wird eine große effektive und aktive Filterfläche bereitgestellt. Insgesamt wirkt der erfindungsgemäße Filter dabei als Tiefenfilter, d.h. die Abscheidung der Teilchen (Mikroorganismen) erfolgt durch Elektroadsorption am elektroaktiven Filtermaterial im Innern des Filters.

Der beschriebene Filter wird bevorzugt in der erfindungsgemäßen Wasserauslaufarmatur bzw. dem erfindungsgemäßen Anschlussstück so eingesetzt, dass das die Leitung der Wasserauslaufarmatur durchströmende Wasser in Längsrichtung durch die Kanäle des Filters strömt, wobei im Wasser enthaltene Mikroorganismen am elektroaktiven Material des Filters angelagert werden können. Die Anlagerung der Mikroorganismen am elektroaktiven Material erfolgt dabei auch in der Gegenrichtung, d.h. falls Mikroorganismen von außen in den Bereich der Auslauföffnung gelangen, bspw. durch Spritzwasser, werden sie im Filter gebunden.

Diese und weitere Vorteile der Erfindung ergeben sich aus den nachfolgend unter Bezugnahme auf die begleitenden Zeichnungen näher beschriebenen Ausführungsbeispielen. Die Zeichnungen zeigen:
- **Fig.1**:: Schematische Darstellung einer ersten Ausführungsform einer erfindungsgemäßen Wasserauslaufarmatur;
- **Fig. 2:**: Schematische Darstellung einer zweiten Ausführungsform einer Wasserauslaufarmatur mit einem erfindungsgemäßen Anschlussstück;
- **Fig. 3:**: Schematische Darstellung eines bevorzugt in der erfindungsgemäßen Wasserauslaufarmatur verwendeten Filters;
- **Fig. 4:**: Schematische Darstellung der Aufwicklung eines Filtermaterials zu einem Filter gemäß Figur 3, welcher bevorzugt in der erfindungsgemäßen Wasserauslaufarmatur verwendet wird.

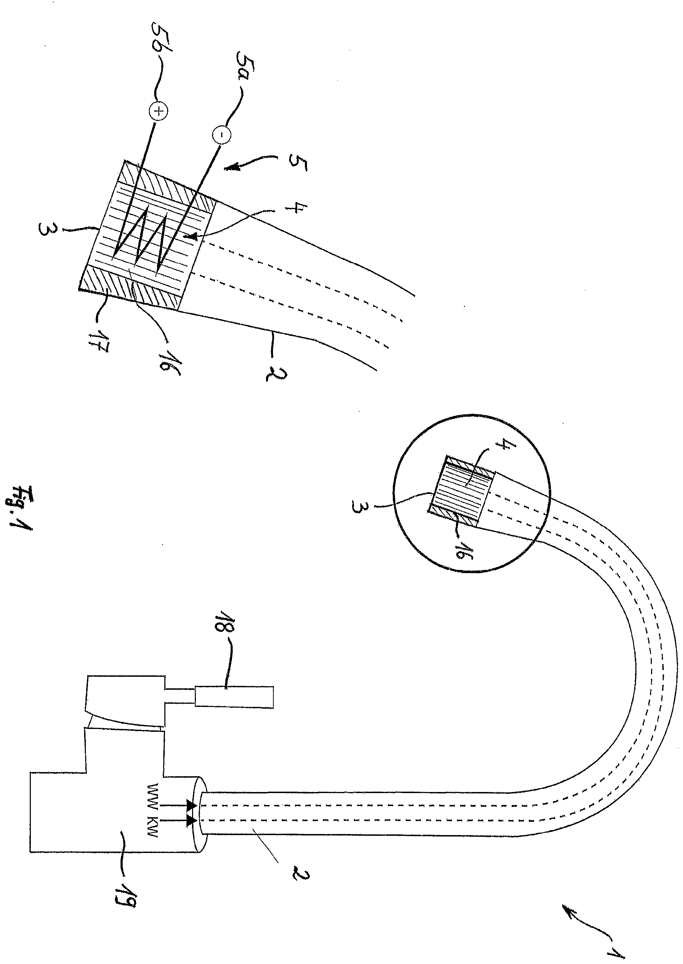

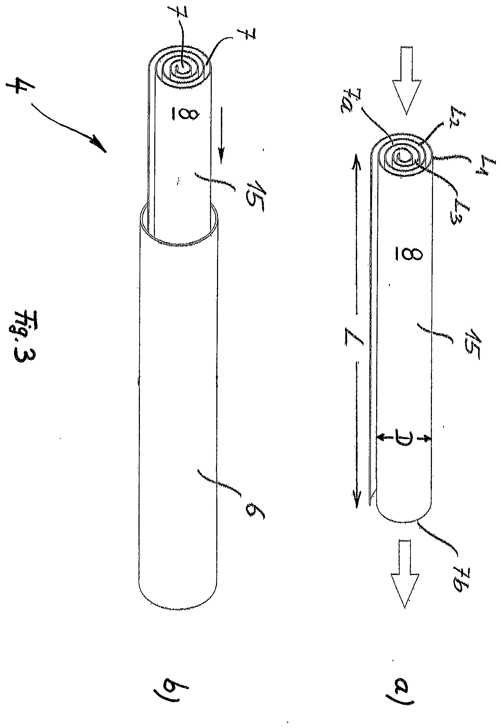

In Figur 1 ist ein Wasserhahn gemäß der Erfindung schematisch dargestellt. Der Wasserhahn 1 umfasst eine im Wesentlichen rohrförmige Leitung 2 mit einer Auslauföffnung 3 am stromabwärtigen Ende der Leitung. Das stromaufwärtige Ende der Leitung 2 ist über eine Mischarmatur 19 mit einem Zulauf für Warmwasser (WW) und für Kaltwasser (KW) verbunden. An der Mischarmatur 19 ist ein Hebel 18 zum Öffnen der Ventile und zur Regulierung des Mischungsverhältnisses von Warmwasser und Kaltwasser angeordnet. Im Bereich der Auslauföffnung 3 ist im Inneren der Leitung 2 eine Filteraufnahme 16 angeordnet. In der Filteraufnahme 16 ist austauschbar ein Filter 4 eingelegt. Die Filteraufnahme 16 kann beispielsweise durch einen vergrößerten Innendurchmesser der Leitung 2 am stromabwärtigen Ende ausgebildet sein. Die in Figur 3 gezeigte bevorzugte Ausführungsform des Filter 4 (welche nachfolgend noch im Detail erläutert wird) ist als Wickelfilter 15 ausgebildet und weist zum Einsetzen in die Filteraufnahme 16 zweckmäßig ein hülsenförmiges Filtergehäuse 6 auf, in dem ein Filtermaterial 8 angeordnet ist, welches geeignet ist, Mikroorganismen zu binden. Bei dem Filtermaterial kann es sich beispielsweise um ein zylindrisch zu dem Wickelfilter 15 aufgerolltes flächiges Filtermaterial 8 handeln. Zum Einfügen des Filter 4 in die Filteraufnahme 16 ist diese zweckmäßig mit einem abnehmbaren oder verschwenkbaren Deckel 17 versehen. Bei geöffnetem Deckel 17 kann der Filter 4 in die Filteraufnahme 16 eingefügt oder herausgenommen und gegen einen Ersatzfilter ausgetauscht werden.

Gemäß der Erfindung ist der Filter 4 zum Abtöten der im Filter gebundenen Mikroorganismen mit einer Heizeinrichtung 5 gekoppelt. Bei dem hier schematisch dargestellten Ausführungsbeispiel weist die Heizeinrichtung 5 eine Heizwendel auf, die um das Filtermaterial des Filters 4 gewickelt ist oder durch das Filtermaterial verläuft. Die Heizwendel ist über Anschlüsse 5a, 5b mit einer Energieversorgungseinrichtung verbunden. Die Energieversorgungseinrichtung ist bei diesem Ausführungsbeispiel durch eine Stromversorgung, wie z.B. einen Akkumulator oder eine Batterie, gebildet, welche mit einer Steuereinrichtung gekoppelt ist. Die Steuereinrichtung steuert die Energieversorgungseinrichtung so an, dass in vorgegebenen Desinfektionszyklen die Heizwendel mit elektrischem Strom versorgt und dadurch auf Temperaturen von mehr als 70°C erhitzt wird. Dadurch wird das Filtermaterial des Filters 4 soweit erhitzt, dass die im Filtermaterial gebundenen Mikroorganismen zumindest im Wesentlichen vollständig abgetötet werden. Die Dauer und die Abstände der Desinfektionszyklen sind dabei über die Steuereinrichtung einstellbar. Als zweckmäßig haben sich zeitliche Abstände der Desinfektionszyklen von ca. 2 bis 4 Stunden und eine Dauer der Desinfektionszyklen von ca. 3 bis 6 Minuten erwiesen, um in periodischen Abständen die im Filtermaterial angesammelten Mikroorganismen zumindest weitgehend vollständig abzutöten.

Zweckmäßig schließt sich an jeden Desinfektionszyklus eine Spülung des Filters 4 an. Hierbei wird - bevorzugt über die Steuereinrichtung automatisch gesteuert - Wasser mit hohem Druck aus dem Kaltwasserzufluss durch die Leitung 2 und durch den Filter 4 geleitet. Durch den hohen Druck werden die zuvor im Desinfektionszyklus abgetöteten Mikroorganismen zumindest teilweise aus dem Filtermaterial des Filters 4 ausgetragen. Dadurch wird der mit Mikroorganismen beladene Filter 4 regelmäßig regeneriert. Es ist dabei möglich, die Regeneration des Filters durch Durchleiten von kaltem Wasser nach jedem Desinfektionszyklus vorzunehmen oder in gesondert geregelten Regenerationszyklen, welche dann zweckmäßig einen größeren zeitlichen Abstand zueinander aufweisen als die Desinfektionszyklen.

In einer zeichnerisch hier nicht dargestellten Ausführungsvariante ist der Filter 4 zusätzlich noch mit einer Einrichtung zum Austragen der im Filter gesammelten Mikroorganismen gekoppelt. Bei dieser Einrichtung zum Austragen der im Filter gesammelten Mikroorganismen handelt es sich beispielsweise um eine Spüleinrichtung, mit der eine Spülflüssigkeit in vorgegebenen Regenerationszyklen in den Filter 4 eingeleitet wird. Damit die Spülflüssigkeit wieder aus dem Filter abfließen kann, ist dieser zweckmäßig mit einer (hier nicht zeichnerisch dargestellten) Ablaufleitung versehen. Bei der Spülflüssigkeit kann es sich um Wasser oder um ein wässriges Tensid handeln. Ein wässriges Tensid weist dabei den Vorteil auf, dass es am Filtermaterial gebundene Mikroorganismen vollständig vom Filtermaterial ablösen und so zu einer vollständigen Regeneration des Filters führen kann.

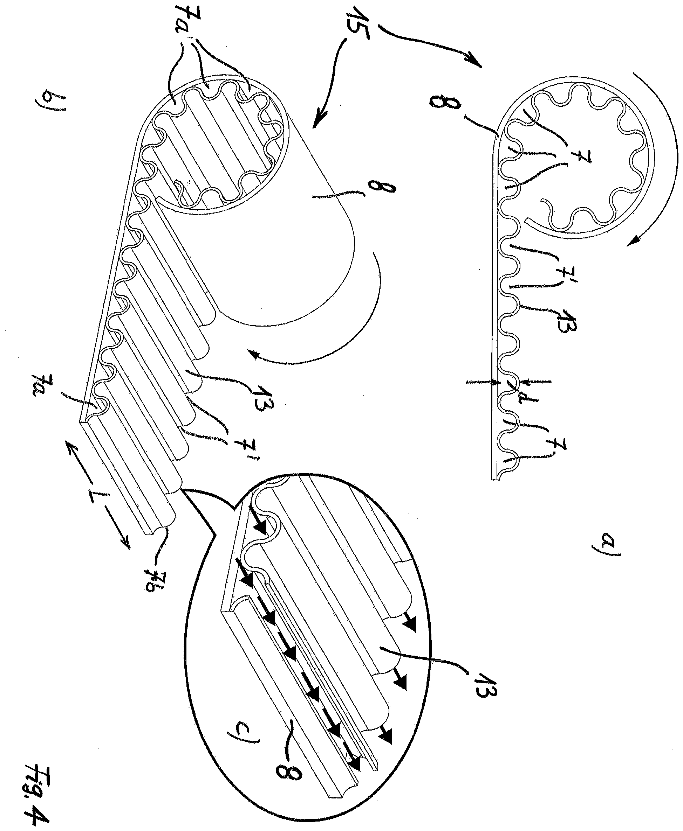

Ein bevorzugter Aufbau des in der erfindungsgemäßen Wasserauslaufarmatur 1 verwendeten Filters 4 ist in den Figuren 3 und 4 schematisch dargestellt. Der bevorzugte Filter 4 ist dabei als Wickelfilter 15 ausgebildet und weist eine Mehrzahl von zumindest im Wesentlichen parallel zueinander und in einer Längsrichtung des Filters verlaufende Kanäle 7 auf, welche jeweils einen Kanaleingang 7a und einen Kanalausgang 7b aufweisen (Figur 3 und Figur 4). Die Kanäle 7 sind dabei zweckmäßig zumindest teilweise von einem elektroaktiven Material begrenzt.

Vorteilhaft ist das zu einem Zylinder aufgewickelte Filtermaterial 8 wie in Figur 3b gezeigt in einem hohlzylindrischen Filtergehäuse 6 eingefügt. Der bevorzugte Filter 4 wird dabei so in die Filteraufnahme 16 der Wasserauslaufarmatur 1 eingelegt, dass das die Leitung 2 durchströmende Wasser jeweils vom Kanaleingang 7a zum Kanalausgang 7b durch den Filter 4 strömt, ohne dabei das Filtermaterial 8 zu durchströmen. Dadurch wird ein geringer Strömungswiderstand des bevorzugten Filters 4 gewährleistet, weshalb der bevorzugte Filter 4 das Ausströmen des Wassers aus der Auslauföffnung 3 der erfindungsgemäßen Wasserauslaufarmatur nicht (wesentlich) behindert. Im Wasser enthaltene Mikroorganismen werden durch Adsorption am Filtermaterial 8 des Filters 4 angelagert, wobei dies in beiden Richtungen erfolgt. Wegen der im Vergleich zur großen Strömungsgeschwindigkeit des in Durchflussrichtung durch die Leitung 2 strömenden Wassers adsorbiert der Filter 4 allerdings in erster Linie Mikroorganismen (Keime) aus Wasser (insbesondere Spritzwasser), welches von außen in die Leitung 2 (also entgegen der Durchflussrichtung des Wassers durch die Wasserauslaufarmatur 1) insbesondere langsam diffundierend eindringt. Dadurch wird eine retrograde Verkeimung durch Eintritt von Mikroorganismen bzw. Keimen von außen in die Leitung 2 (also entgegen der Durchflussrichtung des Wassers durch die Wasserauslaufarmatur 1) verhindert, weil die von außen eintretenden Keime durch Adsorption, insbesondere Elektroadsorption, in dem Filter 4 gebunden und zweckmäßig in regelmäßigen Abständen durch Erhitzen mittels der Heizeinrichtung 5 abgetötet werden können.

Wie in Figur 4 gezeigt wird zur Herstellung des bevorzugten Filters 4 ein flächiges Filtermaterial 8, bspw. ein Papier- oder Textilmaterial, wie z.B. ein Textilgewebe, ein Faserfilz oder ein Faservlies, verwendet und - wie in den Figuren 4a und 4b angedeutet - rollenförmig zu einem Zylinder aufgewickelt. Auf einer Seite des flächigen Filtermaterials 8 sind dabei Abstandshalter 13 angeordnet. In dem in Figur 4 gezeigten Ausführungsbeispiel weisen die Abstandshalter 13 eine wellenförmige Struktur auf, ähnlich wie bei einer Wellpappe. Es sind jedoch auch andere Ausgestaltungen von Abstandshaltern möglich, wie z.B. eine zick-zack-förmige Struktur oder stabförmige Abstandshalter, welche auf der Oberfläche des flächigen Filtermaterials 8 im Abstand zueinander angeordnet und befestigt sind und welche sich in Längsrichtung L des Filters erstrecken. Zwischen den Abstandshaltern 13 und dem flächigen Filtermaterial 8 sind Kanäle 7 ausgebildet, die in Längsrichtung L des Filters verlaufen und jeweils einen offenen Kanaleingang 7a und einen offenen Kanalausgang 7b aufweisen. Entsprechend bilden sich beim Aufwickeln des flächigen Filtermaterials 8 mit den Abstandshaltern 13 auch zwischen den Abstandshaltern 13 und einer darauf aufliegenden Lage L1, L2 des Filtermaterials 8 Kanäle 7' aus.

Nach dem Aufwickeln sind benachbarte Lagen L1, L2 des Wickelfilters 15 durch die Abstandshalter 13 voneinander getrennt, wodurch in der Wickelfilterstruktur eine Mehrzahl von zumindest im Wesentlichen parallel zueinander verlaufenden und sich in Längsrichtung L des Filters erstreckende Kanäle 7, 7' ausgebildet werden. Die Stirnseiten des aufgewickelten Wickelfilters 15 sind offen und bilden dadurch offene Kanaleingänge 7a, 7b an den Stirnseiten des Zylinders aus. Die Länge L der Kanäle 7 in Längsrichtung des Filters ist dabei bevorzugt wesentlich größer als der Kanaldurchmesser d (wie in Figur 4 dargestellt). Der Gesamtdurchmesser D (Figur 3) des zu einem Wickelfilter 15 aufgewickelten Zylinders liegt dabei zweckmäßig zwischen 10 mm und 50 mm und bevorzugt zwischen 10 mm und 30 mm und die Länge L der Kanäle 7 in Längsrichtung liegt bspw. zwischen 5 mm und 50 mm und bevorzugt im Bereich von 5 bis 30 mm.

Bei dem Filtermaterial 8 handelt es sich bevorzugt um ein elektroaktives Material, insbesondere um einen elektropositiven Textil-Verbundstoff, der insbesondere in wässriger Umgebung über ein elektrokinetisches Potential (Zeta-Potential) verfügt. Das Filtermaterial 8 enthält bspw. zur Ausbildung eines positiven elektrokinetischen Potentials (Zeta-Potential) ein Metalloxid, beispielsweise Aluminiumoxid und/oder Aluminiumhydroxid und/oder Böhmit oder Zirkonoxid. Als besonders geeignet hat sich ein Filtermaterial 8 in Form eines Textil-Verbundstoffs erwiesen, welches ein Gemisch von Mikro- oder Nanoteilchen oder Fasern eines Metalloxids mit einem faserigen Trägermaterial enthält. Bei dem faserigen Trägermaterial kann es sich beispielsweise um ein Faservlies aus Polymer-, Carbon- oder Glasfasern handeln. Das Filtermaterial 8 kann auch vollständig aus einem Gemisch aus Metalloxid-Fasern und dem faserigen Trägermaterial bestehen. Zusätzlich oder alternativ kann das Filtermaterial 8 auch noch ein Silikat mit einem negativen elektrokinetischen Potenzial enthalten.

In einem bevorzugten Ausführungsbeispiel des bevorzugten Filters 4 sind auch die Abstandshalter 13 aus einem solchen elektroaktiven Material gebildet. In diesem Ausführungsbeispiel sind die Kanäle 7 vollständig von einem elektroaktiven Material umgeben, nämlich einerseits von dem flächigen Filtermaterial 8 und andererseits von den ebenfalls aus einem elektroaktiven Material gebildeten Abstandshaltern 13.

Wie in Figur 3 gezeigt, weist der Wickelfilter 15 mehrere Lagen L1, L2, L3 aus dem flächigen Filtermaterial 8 sowie die zwischen benachbarten Lagen L1, L2 angeordneten Abstandshalter 13 auf, wobei das flächige Filtermaterial 8 als Rolle aufgewickelt ist. Der Filter 4 kann jedoch auch aus sandwichartig übereinander liegenden ebenen Lagen L1, L2, L3 aus einem flächigen Textilmaterial ausgebildet sein, welche durch Abstandshalter voneinander getrennt sind. Zweckmäßig handelt es sich auch hier bei dem flächigen Textilmaterial um ein elektroaktives Material und auch die Abstandshalter können hier aus einem elektroaktiven Material gefertigt sein.

Der bevorzugt als Wickelfilter 15 ausgebildete Filter 4 wird so in der erfindungsgemäßen Wasserauslaufarmatur angeordnet, dass das Wasser den Filter 4 durch die Kanäle 7 durchströmt, d.h. die Längsrichtung der Kanäle liegt parallel zur Strömungsrichtung des aus der Wasserauslaufarmatur strömenden Wassers.

Die zur Erhitzung des Filters 4 erfindungsgemäß vorgesehene Heizeinrichtung 5 ist in den Figuren 3 und 4 nicht dargestellt. Zweckmäßig weist die Heizeinrichtung 5 Heizdrähte auf, welche durch die Kanäle 7 des bevorzugten Filters 4 verlaufen oder um den zylindrisch aufgewickelten Wickelfilter 15 angeordnet sind, bspw. helixförmig.

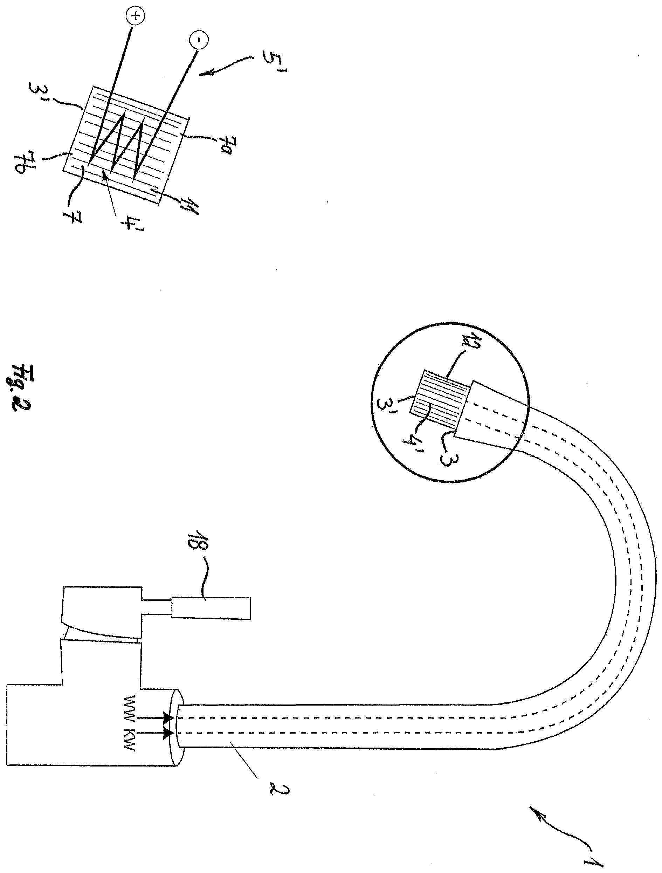

In Figur 2 ist eine Wasserauslaufarmatur 1 mit einer Leitung 2 und einer Auslauföffnung 3 dargestellt, welche mit einem erfindungsgemäßen Anschlussstück 12 versehen ist. Das Anschlussstück 12 ist dabei am stromabwärtigen Ende der Leitung 2, also an der Auslauföffnung 3, an der Leitung 2 befestigt. Das Anschlussstück 12 weist ein hohlzylindrisches Gehäuse 13 auf, welches an einem axialen Ende ein Anschlusselement 14 zur Befestigung des Anschlussstücks 12 an der Wasserauslaufarmatur 1 aufweist. Bei dem Anschlusselement 14 handelt es sich beispielsweise um ein Innengewinde am Innenumfang des Gehäuses 13, welches mit einem entsprechenden Außengewinde am stromabwärtigen Ende der Leitung 2 verbunden werden kann. Im Gehäuse 13 des Anschlussstücks 12 verläuft ein Durchflusskanal 11, welcher in eine Auslauföffnung 3' mündet. In dem Durchflusskanal 11 ist ein Filter 4' angeordnet, der geeignet ist, Mikroorganismen zu binden. Der Filter 4' ist dabei gemäß der Erfindung mit einer Heizeinrichtung 5' zum Abtöten der im Filter gebundenen Mikroorganismen gekoppelt. Mit der Heizeinrichtung 5' kann das Filtermaterial des Filters 4' auf Temperaturen von mehr als 70°C erhitzt werden, um die im Filter gebundenen Mikroorganismen thermisch abzutöten.

Das Anschlussstück 12 wird bestimmungsgemäß wie in Figur 2 gezeigt im Bereich der Auslauföffnung 3 der Wasserauslaufarmatur 1 an dieser befestigt. Dadurch wird zum einem verhindert, dass Mikroorganismen von außen durch die Auslassöffnung 3 in die Leitung 2 der Wasserauslaufarmatur eindringen können. Gleichzeitig wird das die Wasserauslaufarmatur 1 durch die Auslauföffnung 3 verlassende Wasser durch den Filter 4' des Anschlussstücks 12 geleitet und dadurch gefiltert.

Das in Figur 2 dargestellte Anschlussstück 12 kann an herkömmliche Wasserauslaufarmaturen, insbesondere Wasserhähne angeschlossen werden. Dadurch können bereits installierte Wasserauslaufarmaturen mit einer Filtereinrichtung gemäß der Erfindung nachgerüstet werden.

Der Anwendungsbereich der Erfindung ist vielfältig. So können beispielsweise Wasserauslaufarmaturen von häuslichen oder gewerblichen Wasserversorgungen mit einer Filtereinrichtung gemäß der Erfindung ausgestattet werden. Dies ist vor allem in Gebäuden oder Einrichtungen besonders vorteilhaft, in denen erhöhte Hygieneanforderungen an die Keimfreiheit des benötigten Trinkwassers gestellt werden, wie dies beispielsweise in medizinischen Einrichtungen wie Krankenhäusern oder in lebensmittelverarbeitenden Betrieben der Fall ist. Wasserauslaufarmaturen gemäß der Erfindung können darüber hinaus auch in medizinischen Geräten eingesetzt werden, wie z.B. in Zahnarztstühlen. Dort besteht die Gefahr einer retrograden Verkeimung von Wasserauslaufarmaturen durch mit Mikroorganismen kontaminiertes Spritzwasser, das von außen in die Auslauföffnung eindringt und dort über einen längeren Zeitraum stagniert. Durch die Stagnation des von außen in die Leitung eingetretenen Spritzwassers können sich verstärkt Mikroorganismen im Bereich der Auslauföffnung der Wasserauslaufarmatur bilden, welche dann bei der nächsten Verwendung der Wasserauslaufarmatur zu einer Verunreinigung des ausströmenden Reinwassers mit Mikroorganismen führen können. Dies kann durch eine erfindungsgemäße Wasserauslaufarmatur oder durch ein erfindungsgemäßes Anschlussstück zum Anschließen an eine solche Wasserauslaufarmatur verhindert werden.

Die Erfindung ist nicht auf die oben beschriebenen und in den Zeichnungen dargestellten Ausführungsformen beschränkt. So können statt der im Detail beschriebenen Filter auch andere Filter verwendet werden, wie z.B. Sterilfilter mit einem mikroporösen Filtermaterial, wie Mikro- oder Ultrafilter, in denen das Wasser eine Mikro- oder Ultrafiltrationsmembran mit Porendurchmesser im Bereich von 0,1 bis 0,22 µm bei der Mikrofiltration oder unter 0,1 µm bei der Ultrafiltration durchströmt. Ferner ist es möglich, den Filter nur im Bereich einer Warmwasserleitung der Wasserauslaufarmatur anzuordnen, da dort aufgrund der höheren Wassertemperaturen eine höhere Gefahr des Anwachsens von Populationen von Mikroorganismen besteht. Zweckmäßig ist es jedoch, sowohl in der Kalt- wie auch in der Warmwasserleitung oder bei einem Wasserhahn mit einer Mischbatterie im Bereich einer Mischleitung einen Filter gemäß der Erfindung anzuordnen, in der das von der Mischbatterie kommende Wasser mit einer Mischtemperatur fließt. Bevorzugt ist der Filter dabei möglichst nahe am Wasserauslauf (Auslauföffnung) angeordnet.

Weiterhin ist die Anwendung der Erfindung nicht auf die beschriebene Art von Wasserhähnen beschränkt, sondern kann in allen Wasserauslaufarmaturen angewandt werden, bspw. in Mischbatterien, insbesondere Einhebelmischern und in Dusch- oder Brauseköpfen, sowie in Wasserspendern wie Trinkbrunnen oder dergleichen.

## Patentansprüche

1. Wasserauslaufarmatur, umfassend wenigstens eine zumindest im Wesentlichen rohrförmige Leitung (2) mit einer Auslauföffnung (3) und einem Filter (4),**dadurch gekennzeichnet, dass** der Filter (4) mit einer Heizeinrichtung (5) zum unmittelbaren Erhitzen des Filters (4) gekoppelt ist und ein Filtermaterial enthält, welches in dem Wasser enthaltene Mikroorganismen durch Sorption oder Adhäsion bindet, und der Filter (4) in oder an der Auslauföffnung (3) angeordnet ist, um die von außen über die Auslauföffnung (3) in die Leitung (2) eindringenden Mikroorganismen in dem Filter (4) an das Filtermaterial zu binden.

2. Wasserauslaufarmatur nach Anspruch 1, **dadurch gekennzeichnet, dass** der Filter mit einer Spüleinrichtung gekoppelt ist, durch welche die in dem Filter (4) gesammelten Mikroorganismen aus dem Filter (4) gespült werden, insbesondere beim Öffnen der Wasserauslaufarmatur durch das durchströmende Wasser.

3. Wasserauslaufarmatur nach Anspruch 2, **dadurch gekennzeichnet, dass** die Spüleinrichtung eine Spülflüssigkeit in den Filter einleitet, welche den Filter (4) durchströmt und dabei die in dem Filter (4) angesammelten Mikroorganismen aus dem Filter spült, wobei die durch die Spüleinrichtung in den Filter (4) eingeleitete Spülflüssigkeit die Wasserauslaufarmatur zusammen mit den ausgetragenen Mikroorganismen durch die Auslauföffnung (3) oder durch eine Ablaufleitung verlässt.

4. Wasserauslaufarmatur nach einem der voranstehenden Ansprüche, **dadurch gekennzeichnet, dass** der Filter (4) austauschbar in einer Filteraufnahme (16) in der Leitung (2) angeordnet ist, wobei die Filteraufnahme bevorzugt einen abnehmbaren oder verschwenkbaren Deckel (17) aufweist.

5. Wasserauslaufarmatur nach einem der voranstehenden Ansprüche, **dadurch gekennzeichnet, dass** der Filter (4) in einem lösbar an der Auslauföffnung (3) der Leitung (2) befestigten Anschlussstück (12) angeordnet ist.

6. Wasserauslaufarmatur nach Anspruch 5, **dadurch gekennzeichnet, dass** in oder an dem Anschlusstück (12), insbesondere vor einer Auslauföffnung (3') des Anschlusstücks (12), ein Strahlregler angeordnet ist.

7. Wasserauslaufarmatur nach einem der voranstehenden Ansprüche, **dadurch gekennzeichnet, dass** die Heizeinrichtung (5) zum Abtöten der im Filter gebundenen Mikroorganismen mit einer Steuereinrichtung gekoppelt ist, welche die Heizeinrichtung (5) in vorgegebenen Desinfektionszyklen regelmäßig und insbesondere periodisch startet, um den Filter (4) oder ein Filtermaterial des Filters auf Temperaturen von wenigstens 70°C zu erhitzen und dadurch die im Filter (4) angesammelten Mikroorganismen thermisch abzutöten.

8. Wasserauslaufarmatur nach einem der Ansprüche 2 bis 7, **dadurch gekennzeichnet, dass** die Spüleinrichtung zum Austragen der in dem Filter (4) gesammelten Mikroorganismen mit einer Steuereinrichtung gekoppelt ist, welche diese Spüleinrichtung in vorgegebenen Regenerationszyklen regelmäßig und insbesondere periodisch startet, um die im Filter (4) angesammelten Mikroorganismen zur Regeneration aus dem Filter (4) auszutragen.

9. Wasserauslaufarmatur nach einem der voranstehenden Ansprüche, **dadurch gekennzeichnet, dass** der Filter (4) eine Mehrzahl von zumindest im Wesentlichen parallel zueinander und in einer Längsrichtung des Filters verlaufende Kanäle (7) umfasst, die jeweils einen Kanaleingang (7a) und einen Kanalausgang (7b) aufweisen und zumindest teilweise von einem elektroaktiven Filtermaterial (8) mit einem in wässriger Umgebung elektrokinetischen Potential begrenzt werden, wobei das in Längsrichtung durch den Filter (4) geleitete Wasser jeweils vom Kanaleingang (7a) zum Kanalausgang (7b) durch die Kanäle (7) strömt ohne das elektroaktive Filtermaterial (8) zu durchströmen und dabei im Wasser enthaltene Mikroorganismen durch Elektroadsorption am elektroaktiven Filtermaterial (8) angelagert werden.

10. Wasserauslaufarmatur nach Anspruch 9, **dadurch gekennzeichnet, dass** der Filter (4) mehrere Lagen (L1, L2) aus einem flächigen Filtermaterial (8), insbesondere einem Papier- oder Textilmaterial, sowie zwischen benachbarten Lagen (L1, L2) angeordnete Abstandshalter umfasst, wobei das Filtermaterial (8) ein elektroaktives Material ist und/oder die Abstandshalter aus einem elektroaktiven Material gefertigt sind, wobei es sich bei dem elektroaktiven Material bevorzugt um einen elektropositiven Textil-Verbundstoff handelt.

11. Wasserauslaufarmatur nach Anspruch 9 oder 10, **dadurch gekennzeichnet, dass** das elektroaktive Filtermaterial (8) ein Metalloxid, insbesondere Aluminiumoxid und/oder Aluminumhydroxid und/oder Böhmit und/oder Zirkonoxid enthält.

12. Wasserauslaufarmatur nach einem der voranstehenden Ansprüche, **dadurch gekennzeichnet, dass** die Heizeinrichtung (5) zum Abtöten der im Wasserfilter gebundenen Mikroorganismen mit einer Energieversorgungseinrichtung gekoppelt ist, welche einen elektrischen Generator umfasst, der die Bewegungsenergie des durch die Wasserauslaufarmatur strömenden Wassers in elektrische Energie umwandelt, wobei die Heizeinrichtung (5) so ausgebildet ist, dass der Filter (4) oder das Filtermaterial des Filters durch die Heizeinrichtung (5) auf Temperaturen von wenigstens 70°C erhitzbar ist, um die in dem Filter (4) gesammelten Mikroorganismen abzutöten.

13. Anschlussstück (12) zum Anschließen an eine Wasserauslaufarmatur, umfassend ein Gehäuse (13) mit einem Anschlußelement (14) zur Befestigung des Anschlussstück (12) an der Wasserauslaufarmatur (1) und mit einem im Gehäuse (13) verlaufenden Durchflußkanal (11), welcher in eine Auslauföffnung (3') mündet, wobei in dem Durchflußkanal (11) ein Filter (4') angeordnet ist, der Mikroorganismen bindet, welche in dem Wasser enthalten sind, das durch den Durchflußkanal (11) strömt, **dadurch gekennzeichnet, dass** der Filter (4') zum thermischen Abtöten der im Filter gebundenen Mikroorganismen mit einer Heizeinrichtung (5' unmittelbar gekoppelt ist und ein Filtermaterial enthält, welches in dem Wasser enthaltene Mikroorganismen durch Sorption oder Adhäsion bindet und der Filter (4) in oder an der Auslauföffnung (3') angeordnet ist, so dass sowohl die Mikroorganismen, welche in dem durch den Filter (4') geleiteten Wasser enthalten sind als auch die von außen über die Auslauföffnung (3') in das Anschlussstück (12) eindringenden Mikroorganismen in dem Filter (4') an das Filtermaterial gebunden werden.

14. Verfahren zum Betrieb einer Wasserauslaufarmatur nach einem der Ansprüche 1 bis 12, **dadurch gekennzeichnet, dass** die im Filter (4) gebundenen Mikroorganismen in vorgegebenen Desinfektionszyklen regelmäßig und insbesondere periodisch durch Erhitzen des Filters (4) oder seines Filtermaterials abgetötet werden.

15. Verfahren nach Anspruch 14, **dadurch gekennzeichnet, dass** die im Filter (4) gebundenen und thermisch abgetöteten Mikroorganismen in vorgegebenen Regenerationszyklen regelmäßig und insbesondere periodisch aus dem Filter (4) ausgetragen, insbesondere ausgespült werden.

## Claims

1. Water discharge fitting comprising at least one at least substantially tubular pipe (2) with a discharge opening (3) and a filter (4), **characterised in that** the filter (4) is coupled to a heating device (5) for direct heating of the filter (4) and contains a filter material which binds microorganisms present in the water by sorption or adhesion, and the filter (4) is arranged in or on the discharge opening (3) to bind to the filter material the microorganisms in the filter (4) penetrating into the pipe (2) from the outside via the discharge opening (3).

2. Water discharge fitting according to claim 1, **characterised in that** the filter is coupled to a rinsing device, by means of which the microorganisms collected in the filter (4) are rinsed from the filter (4), in particular when the water discharge fittingis opened by the water flowing through.

3. Water discharge fitting according to claim 2, **characterised in that** the rinsing device introduces a rinsing liquid into the filter which flows through the filter (4) and thus rinses the microorganisms collected in the filter (4) from the filter, wherein the rinsing liquid introduced into the filter (4) by the rinsing device leaves the water discharge fitting together with the discarded microorganisms through the discharge opening (3) or through a drainage pipe.

4. Water discharge fitting according to one of the preceding claims, characterisedin that the filter (4) is arranged to be replaceable in a filter mounting (16) in the pipe (2), wherein the filter mounting preferably has a removable or pivotable cover (17).

5. Water discharge fitting according to one of the preceding claims, **characterised in that** the filter (4) is arranged in a connection piece (12) attached releasably to the discharge opening (3) of the pipe (2).

6. Water discharge fitting according to claim 5, **characterised in that** a jet regulatoris arranged in or on the connectionpiece (12), in particular upstream of a discharge opening (3') of the connection piece (12).

7. Water discharge fitting according to one of the preceding claims, **characterised in that** the heating device (5) for killing the microorganisms bound in the filter is coupled to a control device which starts the heating device (5) regularly and in particular periodically in pre-set disinfection cycles in order to heat the filter (4) or a filter material of the filter at temperatures of at least 70°C and thus to thermally kill off the microorganisms collected in the filter (4).

8. Water discharge fitting according to one of claims 2 to 7, **characterised in that** the rinsing device for discarding the microorganisms collected in the filter (4) is coupled to a control device which starts this rinsing device regularly and in particular periodically in pre-set regeneration cycles in order to discard from the filter (4) the microorganisms collected in the filter (4) for regeneration.

9. Water discharge fitting according to one of the preceding claims, **characterised in that** the filter (4) comprises a plurality of channels (7) running at least substantially parallel to one another and in a longitudinal direction of the filter and which in each case have a channel inlet (7a) and a channel outlet (7b) and are limited at least partly by an electroactive filter material (8) having an electrokinetic potential in an aqueous environment, wherein the water conducted in longitudinal direction through the filter (4) flows in each case from the channelinlet (7a) to the channel outlet (7b) through the channels (7) without flowing through the electroactive filter material (8) and thus microorganisms present in the water being attached to the electroactive filter material (8) by electroadsorption.

10. Water discharge fitting according to claim 9, **characterised in that** the filter (4) comprises several layers (L1, L2) of a laminar filter material (8), in particular a paper material or textile material, as well as spacers arranged between adjacent layers (L1, L2), wherein the filter material (8) is an electroactive material and/or the spacers are made from an electroactive material, wherein the electroactive material is preferably an electropositive textile composite material.

11. Water discharge fitting according to claim 9 or 10, **characterised in that** the electroactive filter material (8) contains a metal oxide, in particularaluminium oxide and/or aluminium hydroxide and/or boehmite and/or zirconium oxide.

12. Water discharge fitting according to one of the preceding claims, **characterised in that** the heating device (5) for killing the microorganisms bound in the water filter is coupled to an energy-supply device which comprises an electric generator which converts the kinetic energy of the water flowing through the water discharge fitting into electrical energy, wherein the heating device (5) is designed so that the filter (4) or the filter material of the filter can be heated by the heating device (5) at temperatures of at least 70°C in order to kill the microorganisms collected in the filter (4).

13. Connection piece (12) for connection to a water discharge fitting comprising a housing (13) having a connection element (14) for attaching the connection piece (12) to the water discharge fitting (1) and having a through-flow channel (11) running in the housing (13) and which emerges in a discharge opening (3'), wherein a filter (4'), which binds the microorganisms which are present in the water which flows through the through-flow channel (11), is arranged in the through-flow channel (11), **characterised in that** the filter (4') for thermal killing of the microorganisms bound in the filter is coupled directly to a heating device (5') and contains a filter material which binds microorganisms present in the water by sorption or adhesion and the filter (4) is arranged in or on the discharge opening (3') so that both the microorganisms which are present in the water conducted through the filter (4') and the microorganisms penetrating into the connection piece (12) from the outside via the discharge opening (3') are bound to the filter materialin the filter (4').

14. Method for operating a water discharge fitting according to one of claims 1 to 12, **characterised in that** the microorganisms bound in the filter (4) are killed regularly and in particular periodically in pre-set disinfection cycles by heating the filter (4) or its filter material.

15. Method according to claim 14, **characterised in that** the microorganisms bound in the filter (4) and thermally killed are discarded, in particular rinsed out, from the filter (4) regularly and in particular periodicallyin pre-set regeneration cycles.

## Revendications

1. Robinetterie de sortie d'eau, comprenant au moins un conduit (2) au moins sensiblement de forme tubulaire avec une ouverture de sortie (3) et un filtre (4), **caractérisée en ce que** le filtre (4) est couplé à un dispositif de chauffage (5) servant à chauffer directement le filtre (4) et contient un matériau filtrant, qui lie par sorption ou adhésion des microorganismes contenus dans l'eau, et le filtre (4) est disposé dans ou sur l'ouverture de sortie (3) afin de lier les microorganismes pénétrant depuis l'extérieur, en passant par l'ouverture de sortie (3), dans le conduit (2), dans le filtre (4) au matériau filtrant.

2. Robinetterie de sortie d'eau selon la revendication 1, **caractérisée en ce que** le filtre est couplé à un dispositif de rinçage, par lequel les microorganismes collectés dans le filtre (4) sont éliminés par rinçage du filtre (4), en particulier par l'eau traversant lors de l'ouverture de la robinetterie de sortie d'eau.

3. Robinetterie de sortie d'eau selon la revendication 2, **caractérisée en ce que** le dispositif de rinçage introduit un liquide de rinçage dans le filtre, lequel traverse le filtre (4) et élimine par rinçage dans ce cadre du filtre les microorganismes accumulés dans le filtre (4), dans laquelle le liquide de rinçage introduit dans le filtre (4) par le dispositif de rinçage quitte la robinetterie de sortie d'eau conjointement avec les microorganismes évacués par l'ouverture de sortie (3) ou par un conduit de flux sortant.

4. Robinetterie de sortie d'eau selon l'une quelconque des revendications précédentes, **caractérisée en ce que** le filtre (4) est disposé de manière remplaçable dans un logement de filtre (16) dans le conduit (2), dans laquelle le logement de filtre présente de manière préférée un couvercle (17) pouvant être retiré ou pouvant être pivoté.

5. Robinetterie de sortie d'eau selon l'une quelconque des revendications précédentes, **caractérisée en ce que** le filtre (4) est disposé dans une pièce de raccordement (12) fixée de manière amovible au niveau de l'ouverture de sortie (3) du conduit (2).

6. Robinetterie de sortie d'eau selon la revendication 5, **caractérisée en ce qu'**un régulateur de jet est disposé dans ou au niveau de la pièce de raccordement (12), en particulier avant l'ouverture de sortie (3') de la pièce de raccordement (12).

7. Robinetterie de sortie d'eau selon l'une quelconque des revendications précédentes, **caractérisée en ce que** le dispositif de chauffage (5) est couplé à un dispositif de commande afin de tuer les microorganismes liés dans le filtre, lequel dispositif de commande démarre régulièrement et en particulier de manière périodique le dispositif de chauffage (5) au cours de cycles de désinfection spécifiés afin de chauffer le filtre (4) ou un matériau filtrant du filtre à des températures d'au moins 70°C et ce faisant afin de tuer les microorganismes accumulés dans le filtre (4).

8. Robinetterie de sortie d'eau selon l'une quelconque des revendications 2 à 7, **caractérisée en ce que** le dispositif de rinçage est couplé, afin d'évacuer les microorganismes collectés dans le filtre (4), à un dispositif de commande, qui démarre régulièrement et en particulier de manière périodique ledit dispositif de rinçage au cours de cycles de régénération spécifiés afin d'évacuer du filtre (4) les microorganismes accumulés dans le filtre (4) aux fins de la régénération.

9. Robinetterie de sortie d'eau selon l'une quelconque des revendications précédentes, **caractérisée en ce que** le filtre (4) comprend une multitude de canaux (7) s'étendant au moins sensiblement de manière parallèle les uns par rapport aux autres et dans un sens longitudinal du filtre, lesquels présentent respectivement une entrée de canal (7a) et une sortie de canal (7b) et sont délimités au moins en partie par un matériau filtrant (8) électro-actif avec un potentiel électrocinétique dans un environnement aqueux, dans laquelle l'eau acheminée dans le sens longitudinal à travers le filtre (4) s'écoule respectivement depuis l'entrée de canal (7a) en direction de la sortie de canal (7b) en passant par les canaux (7) sans traverser le matériau filtrant (8) électro-actif et des microorganismes contenus dans l'eau sont ce faisant déposés au niveau du matériau filtrant (8) électro-actif par électro-adsorption.

10. Robinetterie de sortie d'eau selon la revendication 9, **caractérisée en ce que** le filtre (4) comprend plusieurs couches (L1, L2) composées d'un matériau filtrant (8) plat, en particulier d'un matériau en papier ou en textile, ainsi que des écarteurs disposés entres des couches (L1, L2) adjacentes, dans laquelle le matériau filtrant (8) est un matériau électro-actif et/ou les écarteurs sont produits à partir d'un matériau électro-actif, dans laquelle le matériau électro-actif est de manière préférée une matière composite textile électropositive.

11. Robinetterie de sortie d'eau selon la revendication 9 ou 10, **caractérisée en ce que** le matériau filtrant (8) électro-actif contient un oxyde de métal, en particulier un oxyde d'aluminium et/ou un hydroxyde d'aluminium et/ou de la boehmite et/ou de l'oxyde de zirconium.

12. Robinetterie de sortie d'eau selon l'une quelconque des revendications précédentes, **caractérisée en ce que** le dispositif de chauffage (5) est couplé, afin de tuer les microorganismes liés dans le filtre à eau, à un dispositif d'alimentation en énergie, qui comprend un générateur électrique, qui transforme l'énergie liée au mouvement de l'eau s'écoulant à travers la robinetterie de sortie d'eau en une énergie électrique, dans laquelle le dispositif de chauffage (5) est réalisé de telle sorte que le filtre (4) ou le matériau filtrant du filtre peut être chauffé par le dispositif de chauffage (5) à des températures d'au moins 70°C afin de tuer les microorganismes collectés dans le filtre (4).

13. Pièce de raccordement (12) destinée à être raccordée à une robinetterie de sortie d'eau, comprenant un boîtier (13) avec un élément de raccordement (14) servant à fixer la pièce de raccordement (12) à la robinetterie de sortie d'eau (1) et avec un canal de flux traversant (11) s'étendant dans le boîtier (13), lequel débouche dans une ouverture de sortie (3'), dans laquelle un filtre (4') est disposé dans le canal de flux traversant (11), lequel lie des microorganismes, qui sont contenus dans l'eau, qui s'écoule à travers le canal de flux traversant (11), **caractérisée en ce que** le filtre (4') est couplé, afin de tuer de manière thermique les microorganismes liés dans le filtre, directement à un dispositif de chauffage (5') et contient un matériau filtrant, qui lie par sorption ou par adhésion des microorganismes contenus dans l'eau, et le filtre (4) est disposé dans ou au niveau de l'ouverture de sortie (3') de sorte qu'aussi bien les microorganismes, qui sont contenus dans l'eau acheminée à travers le filtre (4'), que les microorganismes pénétrant depuis l'extérieur, en passant par l'ouverture de sortie (3'), dans la pièce de raccordement (12) sont liés dans le filtre (4') au matériau filtrant.

14. Procédé servant à faire fonctionner une robinetterie de sortie d'eau selon l'une quelconque des revendications 1 à 12, **caractérisé en ce que** les microorganismes liés dans le filtre (4) sont tués au cours de cycles de désinfection spécifiés régulièrement et en particulier de manière périodique par le chauffage du filtre (4) ou de son matériau filtrant.

15. Procédé selon la revendication 14, **caractérisé en ce que** les microorganismes liés dans le filtre (4) et tués de manière thermique sont évacués du filtre (4), en particulier par rinçage, au cours de cycles de régénération spécifiés régulièrement et en particulier de manière périodique.
